# EUROPEAN PATENT SPECIFICATION

(11) **EP 2 126 210 B1**
(45) Date of publication and mention of the grant of the patent: **18.12.2013**
(21) Application number: 08718571.6
(22) Date of filing: 17.03.2008
(51) Int. Cl.: D21H 21/22, B65D 81/38, D21H 17/33, B32B 27/10, B65D 3/28, D21H 21/56, D21H 17/35, D21H 21/54

(54) **BOARD, A METHOD OF MANFACTURING THE SAME AND A CONTAINER MADE FROM IT**
KARTON, VERFAHREN ZU SEINER HERSTELLUNG UND DARAUS HERGESTELLTER BEHÄLTER
CARTON, SON PROCÉDÉ DE PRÉPARATION ET RÉCIPIENT FABRIQUÉ À PARTIR DUDIT CARTON

(30) Priority: 16.03.2007 FI 20070213
(43) Date of publication of application: 02.12.2009
(73) Proprietor: Stora Enso Oyj, 00101 Helsinki (FI)
(72) Inventor: RÄSÄNEN, Jari, FI-55420 Imatra (FI); PENTTINEN, Tapani, FI-49210 Huutjärvi (FI); PÖYHÖNEN, Niilo, FI-00250 Helsinki (FI)
(74) Representative: Berggren Oy Ab
(86) International application number: PCT/FI2008/050118
(87) International publication number: WO 2008/113887

(56) References cited:
- GB-A- 1 118 221
- JP-A- 5 042 929
- US-A- 5 514 429
- US-A1- 2001 038 893
- US-A1- 2002 041 046
- US-B1- 6 379 497

## Description

The invention relates to a method of manufacturing board, wherein a pulp web is formed from fibre-based stock onto the wire of a board machine, the web being pressed and dried into a layer of board. The invention further relates to board obtained by the method and a container made of this board, such as a drinking cup.

One disadvantage of conventional drinking cups without handles, which are made of board, is that the hot drinks placed therein tend to burn the fingers of the user. This is due to the poor thermal insulation capacity of the thin board. For the same reason, drinking a very cold drink from the cup may feel uncomfortable for the fingers.

As a solution to the problem, it has been suggested to alter the structure or the design of the cup. One solution comprises arranging a sleeve made of corrugated board around the jacket of the cup. A double jacket of the cup has also been suggested, wherein an insulating layer of air remains inside the jacket. Furthermore, a board cup is known, its jacket being folded downwards at the mouth of the cup, forming a collar that works as a gripping surface.

Another known approach is to improve the thermal insulation capacity of the cup by incorporating into the pulp microshperes that are expanded by heat, wherein the expansive agent comprises a gas, such as isobutene or pentane. Such expanding particles are available commercially. However, there is the disadvantage of the price of the particles and the difficulty to distribute them evenly in the pulp in the foaming process of the board. The known technology in question is described, among others, in patent specification GB 1118221 and patent specifications US 6379497 and US 6802938.

A third solution to the problem has been to improve the thermal insulation capacity of the cup by rendering the polymer coating layer of the cup jacket porous. Patent specification GB 1441666 discloses a board drinking cup, wherein a coating is laminated to the board by means of an adhesive, the coating comprising foamed polystyrene. Patent specification US 4435344 and published application EP 940240 describe board cups that are coated with a layer of foamed low density polyethylene (LDPE). According to the publications, the LDPE layer is foamed with the water vapour that releases from the board when heated, the vapour penetrating the molten polymer layer of the cup, making it porous. Patent specification US 6852381 further describes a foaming method of the polymer coating of board cups, which is based on encapsulated isobutylene that is gasified, when heated.

As a result of foaming the polymer coating of the board cup, the surface of the cup becomes uneven. If the gas bubbles that accumulate or are generated in the coating during foaming break the jacket surface of the cup, the surface becomes rough. The foamed porous polymer coating improves the thermal insulation capacity of the cup body, but there is the disadvantage that the quality of the prints on the cup deteriorates. For example, on board coated with low density polyethylene (LDPE) or ethylene-methyl acrylate copolymer (EMA), high-quality print can be produced by the dry toner-based digital printing technique, its accuracy being impaired by the bumps and cracks that are generated on the surface.

The purpose of the invention is to solve the problem mentioned above by forming porous board, i.e. paperboard or cardboard, that is suitable for the material of drinking cups or similar containers, in particular, its surface being smoother than before, thus enabling a more high-quality print on the jacket surface of the cup. The method of manufacturing the board according to the invention is characterized in that polymer is incorporated into the stock, ending in the board layer, and that the board layer containing humidity is heated so that the polymer melts and water vapour bubbles penetrate into it, making the layer porous.

Compared with the references mentioned above, US 4435344, EP 940240, and US 6852381, an essentially novel feature in the invention is that the polymer is foamed with vapour inside the fibre-based board layer so that the thermal insulation capacity of the board improves because of the pore-forming in this layer. Foaming of the polymer expands the fibre-based board layer more evenly, producing less cracking of the surface than the foaming of the polymer coating layer of the board. In particular, this is the case when the board is provided with a polymer coating that remains infusible and non-foaming during heating.

The polymer can be doped into dry fibres as small particles or drops, which adhere to the fibres, being mainly evenly distributed in the pulp. Doping of polymer can also be carried out for part of the fibres, which are then mixed with undoped fibres. The doped pulp thus obtained is suspended in water as stock, which in a conventional manner is fed onto the wire in the board machine and pressed and dried into a board web, which can become part of the multilayer board that is produced by the machine. In such a multilayer board, one or more fibre-based layers can include doped polymer that is capable of foaming. The polymer can constitute 5 to 40 percent, preferably 10 to 20 percent of the dry weight of the doped fibre-based layer.

In order to melt and foam it, when heated, the melt viscosity of the doped polymer should preferably be at least 15. The polymer used in the invention comprises low density polyethylene (LPDE), for example. The heating temperature may vary within 110 and 150°C, and when using LDPE, preferably within 115 and 125°C.

The foaming of the polymer incorporated into the fibre-based board layer is generated by the humidity released from the board in heating, penetrating into the molten polymer particles, making them foam and expand. Furthermore, the polymer as such may contain humidity, which for its part causes bubbling and foaming, when heated. When the board cools after foaming, the vapour bubbles of the foam remain as cavities and pores in the solidifying, expanded polymer.

Generally, board that is intended for drinking cups is coated with polymer on both sides thereof. The purpose of the coating layers is to prevent the water absorption of the board and to enable the heat sealing of the cups. If the coating and the doping of the board layer fibres are made with the same polymer, the coating layers can also foam to some extent, when the polymer incorporated into the board layer is foamed, even if the foaming of the surface layers is essentially lesser than in the solutions disclosed in the references mentioned above. It is also possible that a polymer with a lower melt viscosity or a higher melting point is used either in one or both coating layers so that, when foaming the polymer in the board layer, the coating layer(s) neither melt nor foam. Thus, it is possible to keep the polymer surface of the board solid and smooth, while the foaming potential can essentially be directed in full to the polymer incorporated into the fibre layer. For example, the fibres of the board layer can be doped with an LDPE having a higher melt viscosity, and the board can be coated with the same LDPE on one side thereof, and with an LDPE having a lower melt viscosity or with a high density polyethylene (HDPE) on the opposite side thereof, and the LDPE doped into the board layer can be foamed by heating the board to a temperature range of about 115 to 125°C so that the temperature remains below the melting temperature of the coating polymer (LDPE or HDPE) of the said opposite side. It is especially preferable to coat the board with a polymer having a lower melt viscosity or a higher melting point on both sides thereof, whereby the coating layers prevent the escape of water vapour and the foaming potential is exclusively directed at the doped polymer having a higher melt viscosity or a lower melting point.

The pore forming of board based on the foaming of polymer can take place in the board machine before reeling the finished board. Such a board as such is suitable to the manufacture of heat-insulated board drinking cups, among others. It is also possible to manufacture containers, such as drinking cups, from the board produced by the machine, their board not being foamed by heating until in the cup machine or by directing the heating at the finished cups.

The board, that is paperboard or cardboard, manufactured according to the invention is characterized in that at least one polymer-bearing fibre layer of the board contains cavities generated by the gas bubbles in the polymer. The board container according to the invention is characterized in consisting of such a porous board manufactured according to the invention. Typically, the container according to the invention is a drinking cup, the porous board of its body preventing the hot drink from burning the fingers of the user.

In the following, the invention is described in detail with the aid of examples and with reference to the appended drawing, wherein
Fig. 1 shows the heating of board drinking cups to foam and expand the polymer that is doped into the fibre layer of the board;
Fig. 2 is a section of the polymer-coated board of the cup body before heating;
Fig. 3 shows, on an enlarged scale, the fibre layer doped with polymer as a section III-III of Fig. 2;
Fig. 4 shows, corresponding to Fig. 2, a section of the cup body after the heating
and foaming process; and
Fig. 5 shows, corresponding to Fig. 3, the fibre layer as a section V-V of Fig. 4, where the doped polymer is foamed and expanded.

In addition to the disposable drinking cups or other board containers produced according to the drawings, the thermal insulation capacity of their bodies being improved by foaming the polymer that is doped into the board layer, the invention also relates to board suitable for such containers, and to its manufacturing method.

The board according to the invention can be manufactured by a board machine, the stock that is fed into its head box containing fibres doped with a polymer, such as LDPE, its melt viscosity being about 15, the polymer in the fibres being adhered to the fibres as small drop-like particles. The doping carried out by the polymer can be directed at the stock used as pulp in its entirety, or at a part of it only, whereby in the latter case, the doped fibres are homogeneously mixed with undoped fibres. The portion of polymer from the dry weight of the pulp fibres can be 5 to 40% by weight, preferably 10 to 20% by weight.

Thereafter, the manufacture of board by the board machine continues in a conventional manner. A pulp web is formed from the stock that is lead from the head box to the machine wire, the web being pressed and dried into a layer of board. Typically, several webs are produced by the machine, which are combined into a multilayer board. One or more of these layers can contain fibres doped with polymer. For example, three-layer folding board can be manufactured, its middlemost layer of chemithermo-mechanical pulp (CTMP) containing doped fibres, and the fibres of the kraft pulp layers that are on both sides thereof are un-doped.

The board used in drinking cups is usually provided with a polymer coating on both sides thereof, enabling the heat sealing of blanks into cups and preventing the water absorption of the board in the cups. Typical coating polymers of cups include polyolefins, such as LDPE and HDPE.

An essential feature of the invention comprises heating the fibre layer that is included in the board and doped with polymer, so that the polymer melts and vapour bubbles are formed in it; in other words, the polymer becomes foamed. The bubbles render the polymer and, along with that, the doped board layer porous, and the porosity remains, when the layer cools and the polymer in the foamed state solidifies. The pore forming may take place as early as in the board machine before the finished board is reeled on a machine roll, but it can also take place later on, after coating the board with polymer, or not until after the coated board has been formed into cups in the cup machine. The appended drawing shows a case of such pore forming of board carried out on finished drinking cups to improve the thermal insulation capacity of the cup bodies.

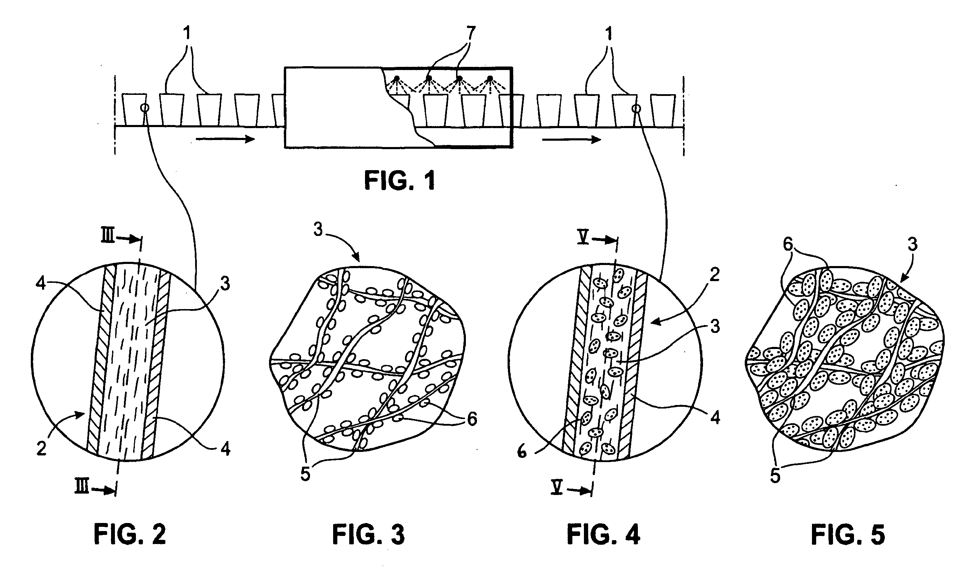

Heating of the drinking cups 1, which are made of polymer-coated board, to foam the board is shown in Fig. 1, and Fig. 2 shows a cross section of board 2, which comprises a layer of board 3 and polymer coating layers 4 on both sides thereof. In a manner known as such, the board layer 3 can consist of several material layers that are joined to each other by the board machine. A polymer with a high melt viscosity, such as the said LDPE that has a melt viscosity of about 15, has been doped into at least one fibre-based material layer of the board layer 3 or the multilayer board, the polymer being adhered to fibres 5 as small drops or particles 6, according to Fig. 3. The polymer coating layer 4 of the inner surface of the cup can comprise the same polymer (LDPE) as that used in doping the fibre layer 3, and the coating layer 4 of the cup's outer surface can comprise a polymer that has a lower melt viscosity or a higher melting point, such as LDPE with a melt viscosity of about 4.5 to 7.5, or HPDE that melts at a higher temperature. Alternatively, in each coating layer 4, LDPE with a melt viscosity of about 4.5 to 7.5 or HDPE can be used, for example.

In the process according to Fig. 1, the jacket board 2 of drinking cups 1 according to Fig. 2 is foamed by heating that is generated by infrared or microwave radiators 7. The radiation heats the board layer 3 and the polymer particles 6 that have been doped thereto, to a temperature wherein these polymer particles melt but the coating polymer 4, which has the lower melt viscosity or the higher melting point, does not melt. When using, for the doping, a polymer that has a melt viscosity of at least about 15, such as LDPE, a suitable heating temperature is about 115 to 125°C.

In addition to melting the doping polymer 6, it is essential for the invention that the heating is sufficient to evaporate the humidity inherently contained in the board layer 3. Vapour in bubble form penetrates the molten polymer particles 6, making them foam. On the contrary, the polymer coating layers 4 do not foam, unless melting occurs in them. For example, if the polymeric layer 4 of the inner surface of cup 1 comprises the same LDPE as the doping polymer 6, foaming caused by the humidity evaporating also occurs therein. After the heating and the foaming of polymer, the drinking cups 1 are cooled, whereby the bubbles generated by the vapour leave the solidifying polymer porous. Fig. 4 is a section of the board jacket 2 of the heat-treated drinking cup 1 with its board layers 3 that have been made porous by foaming the polymer, and with its non-foamed polymer coating layers 4, and Fig. 5 shows the board layer 3 with its fibres 5 and polymer particles, which have been expanded and made porous by foaming. In the foaming, the volume of the polymer particles 6 can increase to 10 to 100-fold, for example, and they can also be fused into each other so as to have an advantageous effect that stiffens the board and the cup or the similar container made of the same.

It is obvious to those skilled in the art that the applications of the invention are not limited to the example described above, but they can vary within the following claims. Instead of polyolefins, the doping and coating polymers can comprise polymers that have a corresponding melt viscosity or melting temperature, which can preferably be biodegradable, such as polylactides (PLA) and biodegradable copolyesters. In addition to polymer, it is also possible to dope, into the fibres constituting the stock, gas capsules, which degrade when heated so that the gas is released and it enhances the foaming of polymer that takes. place in the board layer. Another feasible foaming booster comprises an inorganic compound that is added to the fibres, such as hydroxide, e.g., Mg(OH)₂, or a hydrous salt, which releases water vapour when heated, the vapour foaming the polymer.

## Claims

1. A method of manufacturing board, wherein a pulp web is formed from fibre-based stock on a board machine wire, the web being pressed and dried into a board layer (3), **characterized in that** polymer (6) is incorporated into the stock, ending in the board layer (3), and that the board layer containing humidity is heated so that the polymer melts and water vapour bubbles penetrate the same, the water vapour foaming and expanding the polymer and rendering the board layer porous.

2. A method according to Claim 1, **characterized in that** the melt viscosity of the polymer (6) is at least about 15.

3. A method according to Claim 1 or 2, **characterized in that** the polymer (6) comprises low density polyethylene (LDPE).

4. A method according to any of the preceding claims, **characterized in that** the middle layer of a three-layer folding board is made porous by means of the polymer.

5. A method according to any of the preceding claims, **characterized in that** the heating temperature is about 110 to 150 °C, preferably about 115 to 125 °C.

6. A method according to Claim 5, **characterized in that** the board is moistened before the heating that produces water vapour bubbles.

7. A method according to any of the preceding claims, **characterized in that** the board (3) is provided with a polymer coating (4) on both sides thereof before the heating that produces the water vapour bubbles.

8. A method according to Claim 7, **characterized in that** in the coating (4) at least on one side of the board (3), there is used a polymer same as the polymer (6), which is added to the stock and which makes the board porous.

9. A method according to Claim 7 or 8, **characterized in that** the polymer, which is used in the coating (4) at least on one side of the board (3), has a lower melt viscosity or a higher melting point than the polymer (6), which is added to the stock and which makes the board (3) porous.

10. A method according to any of the preceding claims, **characterized in that** the heating is effected by hot-air heating or infrared or microwave radiation.

11. A method according to any of the preceding claims, **characterized in that** the fibres (5) are doped with the polymer (6) and mixed with undoped fibres, and that the stock comprising the fibre mixture thus obtained is supplied to the wire.

12. A method according to any of the preceding claims, **characterized in that** the pores are produced in the board machine before the finished board is reeled.

13. A method according to any of Claims 1 to 11, **characterized in that** containers, such as drinking cups (1 ), are formed from the board produced by the machine, their board layer (3) being rendered porous by heating that melts the polymer (6) and generates vapour bubbles.

14. Board manufactured by the method according to any of the preceding claims, **characterized in that** at least one polymer-bearing fibre layer (3) of the board contains cavities generated by water vapour bubbles in the polymer (6).

15. Board according to Claim 14, **characterized in that** its both sides are provided with polymer coatings (4).

16. A board container, **characterized in** comprising the board according to Claim 14 or 15.

17. A container according to Claim 16, **characterized in** being a board drinking cup (1).

18. A container according to Claim 17, **characterized in that** the polymer (6) that makes the board layer (3) porous comprises a polymer that has a higher melt viscosity, that the inner surface (4) of the cup comprises the same polymer having said higher melt viscosity, and that the outer surface (4) of the cup comprises a polymer that has a lower melt viscosity.

19. A container according to Claim 17, **characterized in that** the inner or the outer surfaces (4) of the cup are coated with a polymer, which has a lower melt viscosity or a higher melting point than the polymer (6) that makes the board layer (3) porous.

## Patentansprüche

1. Verfahren zur Herstellung von Karton, bei welchem, auf dem Sieb einer Kartonmaschine, aus faserbasierter Papiermasse eine Papierstoffbahn gebildet wird, welche zu einer Kartonschicht (3) gepresst und getrocknet wird, **dadurch gekennzeichnet, dass** Polymer (6) in die für die Kartonschicht (3) bestimmte Papiermasse eingebracht wird und dass die Feuchtigkeit enthaltende Kartonschicht erhitzt wird, so dass das Polymer schmilzt und Wasserdampfblasen dieses durchdringen, wobei das Polymer durch den Wasserdampf aufgeschäumt wird und expandiert und die Kartonschicht porös wird.

2. Verfahren nach Anspruch 1, **dadurch gekennzeichnet, dass** die Schmelzviskosität des Polymers (6) wenigstens 15 beträgt.

3. Verfahren nach Anspruch 1 oder 2, **dadurch gekennzeichnet, dass** das Polymer (6) ein Polyethylen niederer Dichte (LDPE) umfasst.

4. Verfahren nach einem oder mehreren der vorhergehenden Ansprüche, **dadurch gekennzeichnet, dass** die mittlere Schicht eines dreilagigen Faltkartons mittels des Polymers porös gestaltet wird.

5. Verfahren nach einem oder mehreren der vorhergehenden Ansprüche, **dadurch gekennzeichnet, dass** die Erhitzungstemperatur etwa 110 bis 150 °C, vorzugsweise etwa 115 bis 125 °C beträgt.

6. Verfahren nach Anspruch 5, **dadurch gekennzeichnet, dass** der Karton vor dem die Wasserdampfblasen erzeugenden Erhitzen befeuchtet wird.

7. Verfahren nach einem oder mehreren der vorhergehenden Ansprüche, **dadurch gekennzeichnet, dass** der Karton (3) an seinen beiden Seiten mit einer Polymerbeschichtung (4) versehen wird, und zwar vor dem die Wasserdampfblasen erzeugenden Erhitzen.

8. Verfahren nach Anspruch 7, **dadurch gekennzeichnet, dass** in der Beschichtung (4), wenigstens auf einer Seite des Kartons (3), ein Polymer verwendet wird, bei dem es sich um das gleiche Polymer (6) handelt, das der Papiermasse hinzugefügt wird und den Karton porös macht.

9. Verfahren nach Anspruch 7 oder 8, **dadurch gekennzeichnet, dass** das in der Beschichtung (4) auf wenigstens einer Seite des Kartons (3) verwendete Polymer eine niedrigere Schmelzviskosität oder einen höheren Schmelzpunkt aufweist als das Polymer (6), das der Papiermasse hinzugefügt wird und den Karton (3) porös macht.

10. Verfahren nach einem oder mehreren der vorhergehenden Ansprüche, **dadurch gekennzeichnet, dass** das Erhitzen durch Warmluftheizung oder durch Infrarotstrahlung oder Mikrowellenstrahlung erfolgt.

11. Verfahren nach einem oder mehreren der vorhergehenden Ansprüche, **dadurch gekennzeichnet, dass** die Fasern (5) mit dem Polymer (6) dotiert und mit undotierten Fasern gemischt werden, und dass die Papiermasse, welche das so erhaltene Fasergemisch enthält, auf das Sieb aufgegeben wird.

12. Verfahren nach einem oder mehreren der vorhergehenden Ansprüche, **dadurch gekennzeichnet, dass** die Poren in der Kartonmaschine erzeugt werden, bevor der fertige Karton aufgerollt wird.

13. Verfahren nach einem oder mehreren der Ansprüche 1 bis 11, **dadurch gekennzeichnet, dass** aus dem mit der Maschine erzeugten Karton Behälter, wie Trinkbecher (1), hergestellt werden, wobei deren Kartonschicht (3) durch Erhitzen porös gemacht wird, durch welches das Polymer (6) schmilzt und Dampfblasen erzeugt werden.

14. Karton, hergestellt mit dem Verfahren nach einem oder mehreren der vorhergehenden Ansprüche, **dadurch gekennzeichnet, dass** wenigstens eine polymerhaltige Faserschicht (3) des Kartons Hohlräume enthält, die durch Wasserdampfblasen im Polymer (6) erzeugt wurden.

15. Karton gemäß Anspruch 14, **dadurch gekennzeichnet, dass** er beidseitig mit Polymerbeschichtung (4) versehen ist.

16. Kartonbehälter, **dadurch gekennzeichnet, dass** er den Karton nach Anspruch 14 oder 15 umfasst.

17. Behälter nach Anspruch 16, **dadurch gekennzeichnet, dass** der Behälter ein Kartontrinkbecher (1) ist.

18. Behälter nach Anspruch 17, **dadurch gekennzeichnet, dass** das die Kartonschicht (3) porös machende Polymer (6) ein Polymer umfasst, welches eine höhere Schmelzviskosität aufweist, dass die innere Oberfläche (4) des Bechers das gleiche Polymer mit besagter höherer Schmelzviskosität umfasst und dass die äußere Oberfläche (4) des Bechers ein Polymer umfasst, welches eine niedrigere Schmelzviskosität aufweist.

19. Behälter nach Anspruch 17, **dadurch gekennzeichnet, dass** die inneren oder die äußeren Oberflächen (4) des Bechers mit einem Polymer beschichtet sind, das eine niedrigere Schmelzviskosität oder einen höheren Schmelzpunkt aufweist als das die Kartonschicht (3) porös machende Polymer (6).

## Revendications

1. Procédé de fabrication d'un carton, dans lequel une nappe de pâte est formée à partir d'une matière première à base de fibres sur un fil de machine à carton, la bande étant pressée et séchée en une couche de carton (3), **caractérisé en ce qu'**un polymère (6) est incorporé dans la matière première, conduisant à la couche de carton (3), et que la couche de carton contenant de l'humidité est chauffée de sorte que le polymère fonde et que des bulles de vapeur d'eau pénètrent dans celui-ci, la vapeur d'eau moussant et dilatant le polymère et rendant la couche de carton poreuse.

2. Procédé selon la revendication 1, **caractérisé en ce que** la viscosité à l'état fondu du polymère (6) est d'au moins environ 15.

3. Procédé selon la revendication 1 ou 2, **caractérisé en ce que** le polymère (6) comprend du polyéthylène basse densité (LDPE).

4. Procédé selon l'une quelconque des revendications précédentes, **caractérisé en ce que** la couche intermédiaire d'un carton pliant à trois couches est rendu poreux au moyen du polymère.

5. Procédé selon l'une quelconque des revendications précédentes, **caractérisé en ce que** la température de chauffage est d'environ 110 à 150 °C, de préférence environ 115 à 125 °C.

6. Procédé selon la revendication 5, **caractérisé en ce que** le carton est humidifié avant le chauffage qui produit des bulles de vapeur d'eau.

7. Procédé selon l'une quelconque des revendications précédentes, **caractérisé en ce que** le carton (3) est pourvu d'un revêtement de polymère (4) sur les deux faces avant le chauffage qui produit les bulles de vapeur d'eau.

8. Procédé selon la revendication 7, **caractérisé en ce que** dans le revêtement (4) au moins sur un côté du carton (3), il est utilisé un polymère identique au polymère (6), qui est ajouté à la matière première et qui rend le carton poreux.

9. Procédé selon la revendication 7 ou 8, **caractérisé en ce que** le polymère, qui est utilisé dans le revêtement (4) au moins sur un côté du carton (3), a une viscosité à l'état fondu plus faible ou un point de fusion plus élevé que le polymère (6), qui est ajouté à la matière première et qui rend le carton (3) poreux.

10. Procédé selon l'une quelconque des revendications précédentes, **caractérisé en ce que** le chauffage est effectué par chauffage par l'air chaud ou rayonnement infrarouge ou micro-ondes.

11. Procédé selon l'une quelconque des revendications précédentes, **caractérisé en ce que** les fibres (5) sont dopées avec le polymère (6) et mélangées avec des fibres non dopées, et que la matière première comprenant le mélange de fibres obtenu ainsi est appliquée sur le fil.

12. Procédé selon l'une quelconque des revendications précédentes, **caractérisé en ce que** les pores produits dans la machine à carton avant que le carton fini soit enroulé.

13. Procédé selon l'une quelconque des revendications 1 à 11, **caractérisé en ce que** des récipients, tels que des tasses à boisson (1), sont formés à partir du carton produit par la machine, leur couche de carton (3) étant rendue poreuse par chauffage qui fait fondre le polymère (6) et génère des bulles de vapeur.

14. Carton fabriqué par le procédé selon l'une quelconque des revendications précédentes, **caractérisé en ce qu'**au moins une couche de fibres comprenant du polymère (3) du carton contient des cavités générées par des bulles de vapeur d'eau dans le polymère (6).

15. Carton selon la revendication 14, **caractérisé en ce que** ses deux côtés sont pourvus de revêtements de polymère (4).

16. Récipient en carton, **caractérisé en ce qu'**il comprend le carton selon la revendication 14 ou 15.

17. Récipient selon la revendication 16, **caractérisé en ce qu'**il est une tasse de boisson en carton (1).

18. Récipient selon la revendication 17, **caractérisé en ce que** le polymère (6) qui rend la couche de carton (3) poreuse comprend un polymère qui a une viscosité à l'état fondu plus élevée que la surface interne (4) de la tasse comprend le même polymère ayant ladite viscosité à chaud plus élevée, et que la surface externe (4) de la tasse comprend un polymère qui a une viscosité à chaud plus faible.

19. Récipient selon la revendication 17, **caractérisé en ce que** les surfaces interne ou externe (4) de la tasse sont revêtues avec un polymère, qui a une viscosité à l'état fondu plus faible ou un point de fusion plus élevé que le polymère (6) qui rend la couche de carton (3) poreuse.
